# EUROPEAN PATENT APPLICATION

(11) **EP 4 586 125 A1**
(43) Date of publication of application: **16.07.2025**
(21) Application number: 25150911.3
(22) Date of filing: 09.01.2025
(51) Int. Cl.: G06F 21/64, G06V 40/40, H04W 4/38, G06Q 50/00, H04L 9/40

(54) **METHOD WITH ORIGINAL CONTENT AUTHENTICATION BACKGROUND**

(30) Priority: 09.01.2024 KR 20240003582
(71) Applicant: Samsung Electronics Co., Ltd., Suwon-si, Gyeonggi-do 16677 (KR)
(72) Inventor: YOON, Seungkeun, 16678 Suwon-Si (KR); LEE, Kiwoo, 16678 Suwon-Si (KR); LEEM, Dong-Seok, 16678 Suwon-Si (KR); YANG, Hyosook, 16678 Suwon-Si (KR); HEO, Jingu, 16678 Suwon-Si (KR)
(74) Representative: Arnold & Siedsma

(57) **Abstract**

A method for authenticating content is provided. The method includes receiving original content from a user device; determining whether the original content has been altered by performing an authentication process on the original content; based on the original content passing the authentication process, storing the original content and authentication information of the original content in an original content database; and providing a content authentication service based on the authentication information.

## Description

### BACKGROUND

### 1. Field

The following description relates to a method with original content authentication.

### 2. Description of Related Art

Deepfakes are content (e.g., images, videos, audio, etc.) generated using artificial intelligence (e.g., a neural network, deep learning, machine learning, etc.). In some examples, deepfake generators may combine original content with source content to generate deepfakes. As artificial intelligence advances, deepfake media is becoming increasingly realistic and may be used to generate false information such as fake news. Al-generated content and authentic content are becoming indistinguishable. Currently, the main technique for detecting generated fake information involves checking for image alteration with watermarks or managing editing history through a blockchain or the like.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a method performed by an authentication server includes: receiving original content from a user device; determining whether the original content has been altered by performing an authentication process on the original content; based on the original content passing the authentication process, storing the original content and authentication information of the original content in an original content database; and providing a content authentication service based on the authentication information.

In that way, an authentication service is provided to verify and register original content received from a content creator. It provides for additional security relative to potential alteration of the original content afterwards and allows to better discern the authenticity or alteration of content down the line.

Preferably, the original content is sensor data in a secure state, wherein the sensor data is generated by a sensor of the user device.

Preferably, the secure state of the sensor data is attained by encrypting the sensor data, storing the sensor data in a security storage of the user device, transmitting the sensor data using a security protocol, or a combination thereof.

Preferably, the sensor comprises an image sensor.

Preferably, the receiving of the original content includes receiving the image sensor data from the user device in a state in which a portion of an image signal processing (ISP) pipeline of the user device has not been applied to the image sensor data, and the method further includes generating improved original content by the authentication service applying, to the image sensor data, an alternative ISP pipeline corresponding to the unapplied portion of the ISP pipeline of the user device.

Preferably, the method further includes: receiving, from the user device, in association with receiving the original content, additional information including information about the portion of the ISP pipeline of the user device, wherein the improved original content is generated by applying the alternative ISP pipeline to the image sensor data based on information about the portion of the ISP pipeline of the user device.

Preferably, the providing of the content authentication service includes: receiving an instance of the authentication information from another device; extracting the original content from the original content database based on the instance of the authentication information; and transmitting the original content to the other device.

Preferably, the providing of the content authentication service includes: receiving input content and an instance of the authentication information from a social network service (SNS) server; based on the instance of the authentication information, comparing the original content of the original content database with the input content; and transmitting a result of the comparing to the SNS server.

Preferably, the method further includes: receiving additional information including information about a type of the original content, an attribute of the original content, or a combination thereof, wherein the checking of whether the original content is altered includes checking whether the original content has been altered based on the additional information.

Preferably, the authentication process includes applying a liveness detection algorithm to the original content.

In another general aspect, a method performed by a user device comprises: when sensor data is generated by a sensor, storing the sensor data on the user device in a secure state; transmitting the sensor data in the secure state to an authentication server as original content; receiving authentication information of the original content from the authentication server, the authentication information generated by the authentication server based on the original content; and transmitting a request for a content authentication service to the authentication server based on the authentication information.

In that way, the original content can be safely transmitted to an authentication service. It will thus allow fully preventing any external access to the original content, even from the device's own AP.

Preferably, the secure state of the sensor data is attained by encrypting the sensor data, storing the sensor data in a security storage, transmitting the sensor data using a security protocol, or a combination thereof.

Preferably, the sensor data from the sensor is stored in a security storage of the user device by a security processor of the user device and transmitted to the authentication server based on a security protocol.

Preferably, the method further includes: receiving the sensor data corresponding to the authentication information from the authentication server based on the content authentication service.

Preferably, the storing of the sensor data includes: based on whether an original content retention mode is active, selecting between: storing the sensor data in the secure state; and storing the sensor data in a general state with lower security than the secure state.

In another general aspect, a method performed by a social network service (SNS) server comprises: receiving, from a first user device, a request for publication of original content based on authentication information of the original content; transmitting the authentication information to an authentication server, and in response, receiving the original content from the authentication server; and publishing the received original content as a post on an account of the first user device.

Preferably, the method further includes: receiving an instance of the authentication information of the original content and input content from a second user device, and based thereon, transmitting the instance of the authentication information of the original content and the input content to an authentication server; and receiving, from the authentication server, a comparison result corresponding to a comparison between the original content and the input content.

Preferably, the method further includes: publishing the input content and the comparison result as a post of the second user device.

Preferably, the comparison result includes a score of similarity between the original content and the input content.

Preferably, the comparison result includes information about a difference area where similarity between the original content and the input content is less than a threshold.

Other features and aspects will be apparent from the following detailed description, the drawings, and the claims.

Additional features and advantages of embodiments of a method performed by a social network service server are defined by the following set of clauses.
1. A method, performed by a social network service (SNS) server, comprising:
   receiving, from a first user device, a request for publication of original content based on authentication information of the original content;
   transmitting the authentication information to an authentication server, and in response, receiving the original content from the authentication server; and
   publishing the received original content as a post on an account of the first user device.
2. The method of clause 1, further comprising:
   receiving an instance of the authentication information of the original content and input content from a second user device, and based thereon, transmitting the instance of the authentication information of the original content and the input content to an authentication server; and
   receiving, from the authentication server, a comparison result corresponding to a comparison between the original content and the input content.
3. The method of clause 2, further comprising:
   publishing the input content and the comparison result as a post of the second user device.
4. The method of clause 3, wherein the comparison result comprises a score of similarity between the original content and the input content.
5. The method of clause 3, wherein the comparison result comprises information about a difference area where similarity between the original content and the input content is less than a threshold.

### BRIEF DESCRIPTION OF THE DRAWINGS

FIG. 1 illustrates example operations of a user device, an authentication server, and a social network service (SNS) server, according to one or more embodiments.
FIG. 2 illustrates an example configuration of a user device, according to one or more embodiments.
FIG. 3 illustrates an example of an original content registration process, according to one or more embodiments.
FIG. 4 illustrates an example of a content authentication service using authentication information, according to one or more embodiments.
FIG. 5 illustrates an example of a content authentication service using authentication information and input content, according to one or more embodiments.
FIG. 6 illustrates an example of interfaces of an authentication-based publishing service, according to one or more embodiments.
FIG. 7 illustrates an example process of generating an original content dataset, according to one or more embodiments.
FIG. 8 illustrates an example of an authentication-based publishing process using authentication information, according to one or more embodiments.
FIG. 9 illustrates an example authentication-based publishing process using authentication information and input content, according to one or more embodiments.
FIG. 10 illustrates an example method performed by an authentication server, according to one or more embodiments.
FIG. 11 illustrates an example method performed by a user device, according to one or more embodiments.
FIG. 12 illustrates an example method performed by an SNS server, according to one or more embodiments.
FIG. 13 illustrates an example configuration of an electronic device, according to one or more embodiments.

Throughout the drawings and the detailed description, unless otherwise described or provided, it may be understood that the same or like drawing reference numerals refer to the same or like elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

The terminology used herein is for describing various examples only and is not to be used to limit the disclosure. The articles "a," "an," and "the" are intended to include the plural forms as well, unless the context clearly indicates otherwise. As used herein, the term "and/or" includes any one and any combination of any two or more of the associated listed items. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof.

Throughout the specification, when a component or element is described as being "connected to," "coupled to," or "joined to" another component or element, it may be directly "connected to," "coupled to," or "joined to" the other component or element, or there may reasonably be one or more other components or elements intervening therebetween. When a component or element is described as being "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

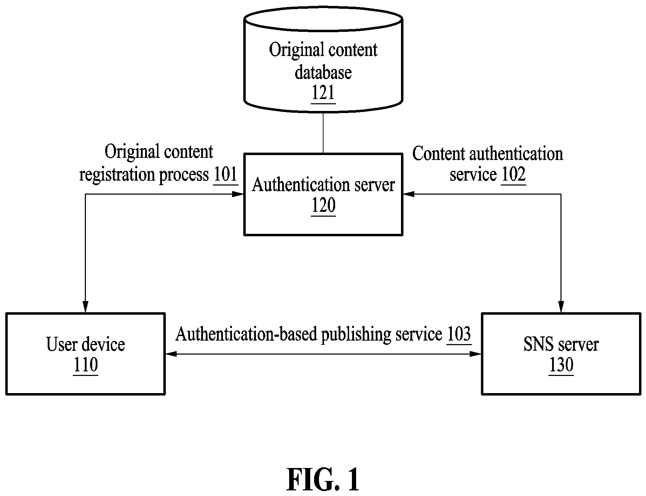

FIG. 1 illustrates example of operations of a user device, an authentication server, and a social network service (SNS) server, according to one or more embodiments. Referring to FIG. 1, a user device 110 may register original content in an original content database 121 of an authentication server 120 through an original content registration process 101.

The user device 110 may include a sensor. The sensor may generate the original content. For example, the original content may include image content, audio content, and the like. However, examples are not limited thereto. For example, the sensor may be an image sensor, an audio sensor, a depth sensor, and the like. However, examples are not limited thereto. Hereinafter, an example of image content of the image sensor may be described. However, examples are not limited thereto and the description is readily applied to other types of content.

The original content may be sensor data originally in a secure state, as generated by the sensor of the user device 110. The original content may not need to be complete for authentication purposes (i.e., the original content may be a portion or a chunk of data sensed by the sensor). However, the original content may include sufficient information to check whether a putative copy of the original content has been altered (differs from the original content). The original content may be formed using low-complexity down-sampling signal processing. A sensor output may be data corresponding to a signal output by the sensor or data obtained by performing pre-approved (discussed below) processing on the data. For example, the sensor output may be raw data generated by the sensor. However, examples are not limited thereto. For example, when the sensor is an image sensor, the sensor data may be image sensor data. The image sensor data may be an image sensor output. The image sensor output may be raw image data, as a non-limiting example.

When the original content is generated, the user device 110 may generate additional information of the original content. The additional information may include information for authenticating the originality of the original content. Authenticating the originality of content may indicate that the content has not been altered. The user device 110 may generate an original content dataset including the original content and/or the additional information of the original content.

A secure state of the original content dataset (e.g., the sensor data) may be a state in which only processing that is previously approved is guaranteed to have been performed on the original content dataset. For example, pre-approved processing (e.g., predetermined processing) may be performed on the original content dataset. For example, the pre-approved processing may involve using an image signal processing (ISP) pipeline. The pre-approved processing of the sensor data may be hardware-based. The pre-approved processing may exclude processing by a software application capable of performing image alteration, for example, by a software application using artificial intelligence (e.g., a neural network, deep learning, machine learning, etc.) such as deepfake technology. That is, the user device 110 may be configured to assure that no pre-approved processing is capable of altering the original content. The pre-approved processing may be provided by a manufacturer of the user device 110. In some implementations, only processing provided by the manufacturer of the user device 110 may be the pre-approved processing.

For example, the secure state of the original content dataset (e.g., the sensor data) may be attained based on encrypting the original content dataset, storing the original content dataset in a local security storage, transmitting the original content dataset using a security protocol, or a combination thereof. The security storage may be a storage that provides a security function, and the security protocol may be a protocol (e.g., a communication protocol) that provides a security function. Such security functions may be provided by a hardware-based secure platform or environment, for example, a Trusted Platform Module, a Knox Vault (TM), or the like. Encrypting the original content dataset, storing the original content dataset in the local security storage, transmitting the original content dataset using the security protocol, or using a combination thereof may prevent any software application from altering the original content dataset, thereby maintaining the secure state of the original content dataset.

The authentication server 120 may receive the original content dataset (e.g., original content) from the user device 110. While still in its secure state, the original content dataset may be received by the authentication server 120. The authentication server 120 may check whether the original content dataset has been altered by performing an authentication process on the original content dataset. That is, the authentication process may be used to check whether the content received from the user device 110 is original content.

For example, the user device 110 may attempt to invoke the original content registration process 101 with fake original content instead of original content. The fake original content may contain false information presented as if the false information is true. For example, content generated using deepfake technology may be fake original content. For example, the image sensor of the user device 110 may capture a screen displaying a result obtained by altering real original content, thereby generating the fake original content. The original content registration process 101 may be invoked/attempted using this fake original content. The authentication server 120 may detect the fake original content through the authentication process. For example, the fake original content may be detected through liveness detection using depth information, thermal information, and the like. The authentication process performed on original content is described in detail below.

When the original content dataset (e.g., the original content) passes the authentication process, the authentication server 120 may store the original content and authentication information of the original content in the original content database 121. For example, the authentication information may be in various forms such as numbers/codes, text, and an image (e.g., a barcode, a quick response (QR) code, etc.). The original content and the authentication information of the original content may be stored and managed as a pair. In FIG. 1, the original content database 121 is illustrated as being outside the authentication server 120. However, the original content database 121 may be in the authentication server 120. The secure state of the original content, as received by the authentication server 120, may be maintained through the original content registration process 101. The secure state of the original content may be maintained by the authentication server 120 in the original content database 121.

The authentication server 120 may also provide a content authentication service 102 based on the authentication information. The content authentication service 102 may be a service (e.g., a web service, a cloud service, etc.) for securing the originality of content. For example, the content authentication service 102 may include an original content provision service that provides original content corresponding to authentication information, an originality check service that checks whether input content is original content, and the like. The input content may be content provided to the authentication server 120 for an originality check. An example of input content is content that is requested for publication by a user of an SNS (e.g., as a posting request) through an SNS function of the SNS server 130. The input content may be referred to as query content. FIG. 1 illustrates the content authentication service 102 between the authentication server 120 and the SNS server 130. However, the content authentication service 102 may be provided to the user device 110 and/or another user device that is different from the user device 110. A detailed example of the content authentication service 102 is described below.

As mentioned, the SNS server 130 may provide an SNS function. Users may use the SNS function to share various types of content with other users. The users may use the SNS function to publish various types of content, and other users may view posts about various types of content. The SNS server 130 may provide an authentication-based publishing service 103. The authentication-based publishing service 103 may be configured for posting/publishing content using the content authentication service 102 as part of its posting/publishing process. For example, the original content, or content similar to the original content by more than a threshold, may be published in a limited manner through the authentication-based publishing service 103. For example, when the publication of input content is requested, a score of the similarity between the original content and the input content may be provided through the authentication-based publishing service 103. The score may include a similarity level and/or a difference level of similarity/difference between the original content and the input content.

The users of the SNS, for example, may share the original content or content similar to the original content through the original content registration process 101, the content authentication service 102, the authentication-based publishing service 103, or a combination thereof, preventing the spread of fake content masquerading as original content.

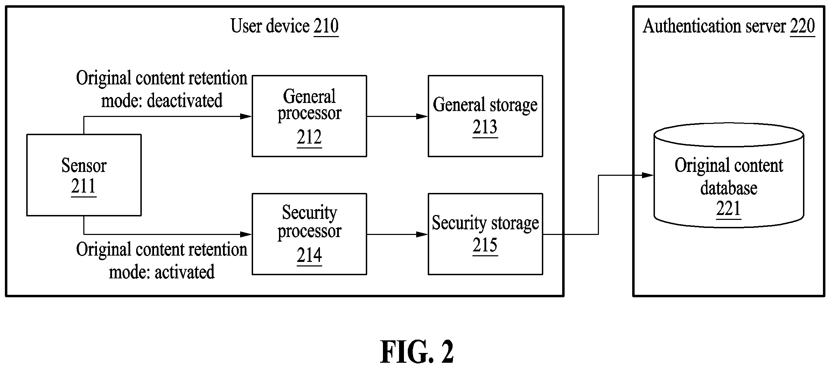

FIG. 2 illustrates an example of a configuration of a user device, according to one or more embodiments. Referring to FIG. 2, a user device 210 may include a sensor 211, a general processor 212, a general storage 213, a security processor 214, and a security storage 215. The general processor 212 and the security processor 214 may be implemented on the same chip (e.g., an application processor (AP)). However, examples are not limited thereto. The general processor 212 and the security processor 214 may also be implemented on separate chips. The general storage 213 and the security storage 215 may be implemented as separate memory devices (e.g., volatile memory, non-volatile memory, and a disk). However, examples are not limited thereto. The general storage 213 and the security storage 215 may also be implemented as the same device.

The security processor 214 may be a processor that provides a security function. The security processor 214 may provide tighter security than the general processor 212. The security processor 214 may include hardware for performing encryption/decryption, computing digests/fingerprints or the like for pieces of input data. In some examples, the security processor 214 may be part of a sealed or isolated computation environment. For example, the security processor 214 may be secured with a startup check that verifies the integrity of various components. Examples of security processors are the Knox Vault Processor (TM), Trusted Platform Modules (TPMs), and the like. For example, the general processor 212 may be a processor, such as a central processing unit (CPU), a graphics processing unit (GPU), and/or a neural processing unit (NPU), that mainly provides control and/or operation functions of the user device 210 (e.g., executes an operating system, applications, manages hardware such as the sensor 211, etc.), and the security processor 214 may be a special processor that provides tight security.

The general storage 213 may be accessible by the general processor 212, and the security storage 215 may be accessible by the security processor 214 but not the general processor 212. Access to the security storage 215 by the general processor 212 may be restricted. Control of or access to the security processor 214 and/or the security storage 215 by general software may be restricted. For example, the general software may be software that is not authorized by an operating system (OS) (e.g., not authorized by a secure boot process). Access to data stored in the security storage 215 may be restricted except when erasing the data or sending the data to the authentication server 220.

When original content (e.g., sensor data) is generated by the sensor 211, an original content dataset including the original content and/or additional information of the original content may be stored in the general storage 213 and/or the security storage 215. For example, when an original content retention mode is inactive, the original content may be stored in a general state in the general storage 213. The general state may have low security. In this case, additional information may not be generated. When the original content retention mode is activate, the original content dataset may be stored in a secure state in the general storage 213 and/or the security storage 215. The secure state may have tighter security than the general state. The original content retention mode may be an operation mode of the user device 110 for preventing or detecting original content alteration. The original content retention mode may be automatically or manually activated. For example, when original content is determined to be significant for maintaining its originality (e.g., for certain types of content, for content captured at certain locations, etc.), the user device 210 may automatically activate the original content retention mode. When generating original content considered by the user to be significant for maintaining its originality, the user may manually activate the original content retention mode.

When the original content is generated, additional information of the original content may be generated by the general processor 212 and/or the security processor 214. The additional information may include information for authenticating the originality of the original content. For example, the additional information may include content generation history (e.g., exchangeable image file format (EXIF)) of the original content, a signal processing process of the original content, the type (e.g., image, video, audio, etc.) of the original content, an attribute (e.g., size) of the original content, image depth information, thermal information, image metadata, a digital signature of the original content, and the like.

When the original content is image sensor data, the image sensor data may be transmitted to the authentication server 220 in a state in which a portion (or all) of an ISP pipeline of the user device 210 is not applied to the image sensor data. For example, the ISP pipeline may include detailed operations such as demosaic, denoise, auto white balance (AWB), color correction matrix (CCM), and the like, some of which may not be used by the user device 210 in generating the original content (sensor data). Part of the additional information may include ISP adjustment information of the image sensor data related to the portion (or all) of the ISP pipeline that is not applied to the image sensor data. The ISP adjustment information may include indications of ISP pipeline stages and parameters for setting the detailed operations of the stages of the ISP pipeline. With this technique, the authentication server 220 may generate improved original content (e.g., improved original image content) by applying an alternative ISP pipeline that corresponds to the portion (or all) of the ISP pipeline to the image sensor data. The inclusion of the ISP adjustment information in the additional information may confer authority to apply the alternative ISP pipeline of the authentication server 220 (or as used by the same) in place of the portion (or all) of the ISP pipeline of the user device 210 not applied to the image sensor data. In addition, the alternative ISP pipeline may be configured according to the ISP adjustment information, e.g., stage(s) may be selected and configured, etc.

Both the user device 110 and the authentication server 120 may include a respective image signal processor capable of performing the ISP pipeline, and the image signal processor of the authentication server 120 may perform the alternative ISP pipeline. To summarize, an ISP pipeline model may be common to the user device 110 and the server side, and ISP pipeline processing or an original content may be split in various ways between them, and such split may be communicated as part of the additional information.

Regarding the user device 210 generating the original content dataset including the original content and the additional information of the original content, for example, the general processor 212 and/or the security processor 214 may generate the original content dataset and may store the original content dataset in the general storage 213 and/or the security storage 215. When the original content dataset is stored in the general storage 213, the original content dataset may be in an encrypted state while it resides in the general storage 213.

When sensor data is generated by the sensor 211, the user device 210 (e.g., the general processor 212 and/or the security processor 214) may store the sensor data in a secure state. The secure state of the original content dataset (e.g., the original content and the sensor data) may be obtained and maintained by encrypting the original content dataset, storing the original content dataset in the security storage 215, transmitting the original content and/or the original content dataset using a security protocol, or a combination thereof. For example, when the original content dataset is stored in encrypted form in the general storage 213, the secure state of the original content dataset may be maintained. As another example, the secure state of the original content dataset may be maintained when the original content dataset is stored in unencrypted form in the security storage 215 (block-level encryption, for example, might be applied to blocks of the original content dataset by the storage stack of the security storage 215). The secure state of the original content dataset may be maintained, for example, when the security protocol is applied to communication among devices (e.g., the sensor 211, the general processor 212, the general storage 213, the security processor 214, the security storage 215, the authentication server 220, and the original content database 221).

For example, when the original content and the additional information are generated while the original content retention mode is in effect, the security processor 214 may store the original content dataset (which includes the original content and the additional information) in the security storage 215. The user device 210 may transmit the original content dataset in the secure state to the authentication server 220, and the transmission may be based on the security protocol. The original content (of the original content dataset stored in the security storage 215) may be stored in the original content database 221 of the authentication server 220 through an original content registration process. The original content dataset may be transmitted in an encrypted state to the authentication server 220. The original content dataset may be encrypted by the security processor 214 before being stored in the security storage 215 and/or before being transmitted to the authentication server 220. In this way, the originality of the original content may be maintained from the generation of the original content by the sensor 211 to the storage of the original content in the original content database 221.

The user device 210 may receive authentication information of the original content from the authentication server 220 and transmit a request for a content authentication service to the authentication server 220 based on the authentication information. The user device 210 may receive the original content (e.g., the sensor data) corresponding to the authentication information from the authentication server 220 based on the content authentication service. The user device 210 may transmit the authentication information of the original content to the authentication server 220. The authentication server 220 may transmit the original content corresponding to the authentication information to the user device 210 based on the content authentication service.

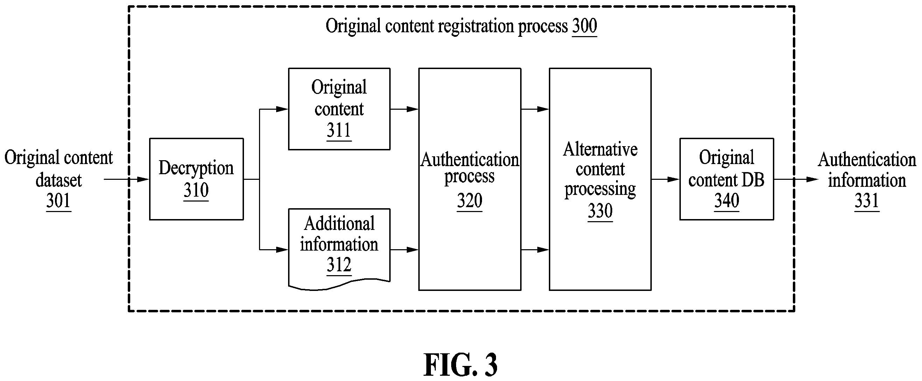

FIG. 3 illustrates an example of an original content registration process, according to one or more embodiments. Referring to FIG. 3, an original content registration process 300 may be performed by an authentication server. Original content 311 and additional information 312 may be extracted from an original content dataset 301 (e.g., received from a user device for registration). When the original content dataset 301 is received in an encrypted state, decryption 310 may be performed on the original content dataset 301; in any case, the original content 311 and additional information 312 may be assumed to be in cleartext form (not encrypted), e.g., for an authentication process 320.

Through the authentication process 320, it may be checked whether the original content 311 has been altered (i.e., is not "original"). Specifically, it may be checked whether the original content 311 and the additional information 312 match each other. For example, the additional information 312 may include content generation history (e.g., EXIF) of the original content 311, a signal processing process of the original content 311, the type (e.g., image, video, audio, etc.) of the original content 311, an attribute (e.g., size) of the original content 311, image depth information, thermal information, a digital signature or fingerprint, a hash, and/or the like. For example, the authentication process 320 may include formal authentication for the original content dataset 301 and/or the original content 311. For example, in the authentication process 320, it may be checked whether the type and/or attribute of the original content 311 matches the type and/or attribute of the additional information 312. For example, in the authentication process 320, liveness of the original content 311 may be checked based on image depth information and/or thermal information of the additional information 312 (any known liveness detection algorithm service may be used). Failure of the authentication process 320 may prevent registration of the original content 311.

In alternative content processing 330, content processing skipped on the source user device may be alternatively performed. For example, when the original content 311 is image sensor data, the alternative content processing 330 may be an alternative (server-side) ISP pipeline. The image sensor data may be received by the authentication server in a state in which a portion of the ISP pipeline of the user device has not been applied to the image sensor data. The authentication server may generate improved/revised original content by applying a portion of its alternative ISP pipeline that corresponds to the portion of the ISP pipeline of the user device that was not applied to the image sensor data. As noted above, the additional information 312 may include ISP adjustment information (of the image sensor data) about the unapplied portion of the ISP pipeline of the user device. Based thereon, the authentication server may generate the improved original content by applying the alternative ISP pipeline to the image sensor data.

When the original content 311 passes the authentication process 320, the original content 311 may be stored in an original content database 340. The authentication server may generate authentication information 331 of the original content 311. The original content 311 and the authentication information 331 of the original content 311 may be stored in the original content database 340. When the alternative content processing 330 is performed, a result (e.g., improved original content) of the alternative content processing 330 may additionally or alternatively be stored as the original content 311 in the original content database 340.

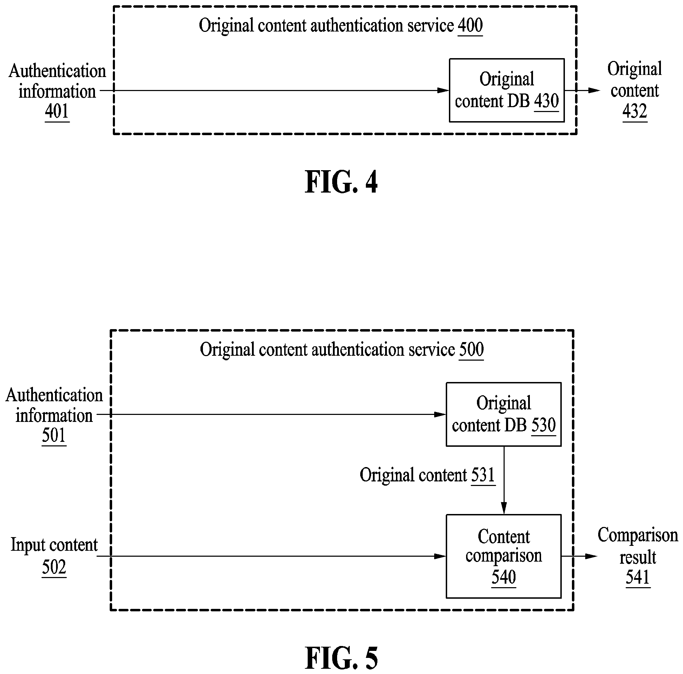

FIG. 4 illustrates an example of a content authentication service using authentication information, according to one or more embodiments. Referring to FIG. 4, an original content authentication service 400 may be performed by an authentication server. The authentication server may receive authentication information 401 from a requesting device, for example, a user device that generated original content 432, another user device, or an SNS server. The authentication server may extract the original content 432 corresponding to the authentication information 401 from an original content database 430 based on the authentication information 401 and may transmit the original content 432 to the requesting device. The requesting device may thereby secure the original content 432 with assurance that it has not been altered, using the authentication information 401. The authentication server may also, or alternatively, respond to the authentication information 401 by providing authentication history of the original content 432 to the requesting device. The authentication history may include a registration record of the original content 432 and an authentication record of the original content 432 (e.g., an audit trail/log).

FIG. 5 illustrates an example of a content authentication service using authentication information and input content, according to one or more embodiments. Referring to FIG. 5, an original content authentication service 500 may be performed by an authentication server. The authentication server may receive input content 502 and authentication information 501 from a requesting device, for example, a user device that generated original content 531, another user device, or an SNS server. The authentication server may extract the original content 531 corresponding to the authentication information 501 from an original content database 530 based on the authentication information 501. The authentication server may perform a content comparison 540 between the extracted original content 531 and the input content 502 and transmit, to the requesting device, a comparison result 541 according to the content comparison 540.

The comparison result 541 may include a score of the similarity between the original content 531 and the input content 502. The score may include/indicate a similarity and/or difference level between the original content 531 and the input content 502. The comparison result 541 may include, for example, information about a difference area where the similarity between the original content 531 and the input content 502 is less than a threshold. Users may recognize an altered state based on the difference-area. For example, users may check whether the difference area is an important area (e.g., a face area) of the original content 531 or an unimportant area (e.g., a background area) of the original content 531.

For example, when the input 502 is generated by adding text to a background area of an instance of the original content 531, the similarity level between the original content 531 and the input content 502 may be low. In this case, the background area including the text may be determined to be a difference area. Users may recognize the altered state of the input content 502 through the difference area (e.g., by displaying the input 502 with the difference-area highlighted). Thus, although the similarity level between the original content 531 and the input content 502 might be low, users may be able to recognize that subjectively more important content of the input content 502 (e.g., a person) is similar to the original content 531.

In addition to the comparison result 541, the authentication server may provide authentication history of the original content 531 to the requesting device. The authentication history may include a registration record of the original content 531 and an authentication record of the original content 531.

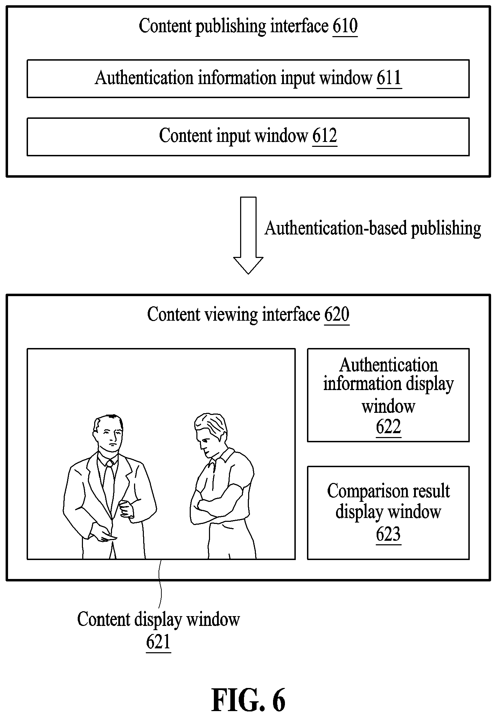

FIG. 6 illustrates an example of interfaces of an authentication-based publishing service, according to one or more embodiments. Referring to FIG. 6, interfaces (e.g., a content publishing interface 610 and a content viewing interface 620) for an authentication-based publishing service of an SNS server, for example, may be provided. The content publishing interface 610 may be used by users, e.g., of the SNS service/server, to request publication of content by the SNS server. The content publishing interface 610 may include an authentication information input window 611 and a content input window 612. Authentication information may be input through the authentication information input window 611. Input content may be optionally input through the content input window 612.

The content publishing interface 610 may be provided, for example, in a user application for interfacing (e.g., posting, accessing) with the SNS. As noted above, the SNS is only an example of how content may be disseminated, and any type of service or application may provide a user interface similar to the content publishing interface 610. Similarly, the content viewing interface 620 may be provided in any type of service or application.

Authentication-based publishing may be performed based on the authentication information and/or the input content. The authentication-based publishing may be performed through the content viewing interface 620. The content viewing interface 620 may be used by users to view content. The content viewing interface 620 may include a content display window 621, an authentication information display window 622, and a comparison result display window 623. The input content or original content may be displayed in the content display window 621. Authentication information of the original content may be displayed in the authentication information display window 622. A comparison result between the original content and the input content may be displayed in the comparison result display window 623. Whether the input content has been altered, and how, may be readily verified using the comparison result.

For example, the SNS server may receive, from a first user device, a request to publish the original content based on the authentication information of the original content, as inputted into the authentication information input window 611. The SNS server may transmit the authentication information to the authentication server and, assuming successful authentication, receive the original content corresponding to the authentication information from the authentication server. The SNS server may publish the original content as a post displayed on the first user device. The SNS server may cause display of the original content in the content display window 621. In this case, because the input content and the comparison result are not present, the comparison result display window 623 may not be displayed, or, the maximum similarity level value may be displayed on the comparison result display window 623.

For example, the SNS server may receive the authentication information of the original content and the input content from a second user device. The authentication information may be received through an instance of the authentication information input window 611 and the input content may be received through an instance of the content input window 612. The second user device may be the same as or different from the first user device. The SNS server may transmit the authentication information and the input content to the authentication server. The authentication server may perform content comparison between the original content and the input content and generate a comparison result. The SNS server may receive the comparison result between the original content and the input content from the authentication server. The SNS server may publish the input content and the comparison result as a post displayed by the second user device, for example, in instances of the content display window 621 and the authentication information display window 622.

As discussed above, the comparison result may include a score/level of the similarity and/or difference between the original content and the input content (as used herein "similarity" also means "difference", with respect to comparing original content with some other content, as the two measures are effectively the same). The comparison result may additional or alternatively include an indication of a difference-area where the similarity between the original content and the input content is less than a threshold. Users may recognize an altered state based on the difference-area. For example, users may check whether the difference-area is an important area (e.g., a face area) of the original content or an unimportant area (e.g., a background area) of the original content.

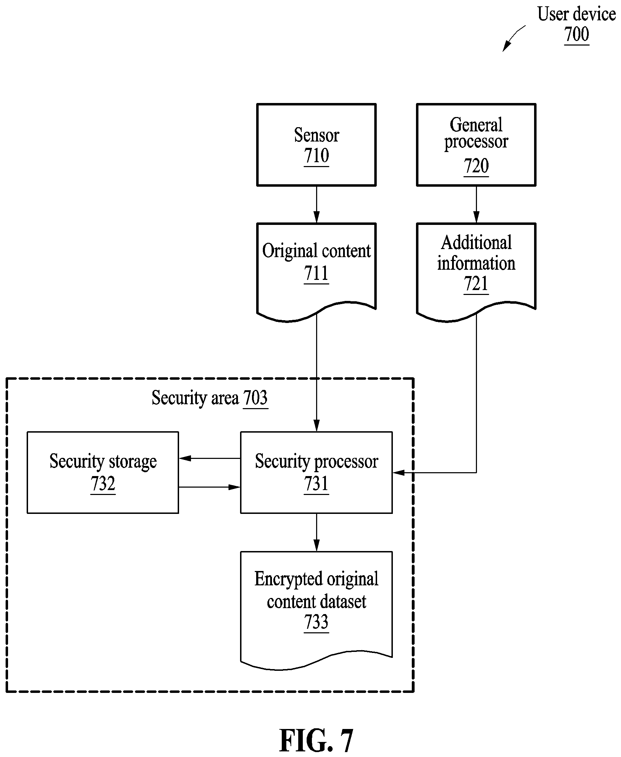

FIG. 7 illustrates an example process of generating an original content dataset, according to one or more embodiments. Referring to FIG. 7, a sensor 710 of a user device 700 may generate original content 711. The original content 711 may be sensor data of the sensor 710. When the original content 711 is generated, a general processor 720 may generate additional information 721 of the original content 711. A security processor 731 may store an original content dataset in a secure state in a security storage 732. The original content dataset may include the original content 711 and the additional information 721.

The security processor 731 may generate an encrypted original content dataset 733 by encrypting the original content dataset, for example, before storing the original content dataset in the security storage 732 or before transmitting the original content dataset to an authentication server. The secure state of the original content dataset may be maintained in a security area 703 (e.g., a secure partition). Although FIG. 7 illustrates an example in which the additional information 721 is generated by the general processor 720, the additional information 721 may also be generated by the security processor 731.

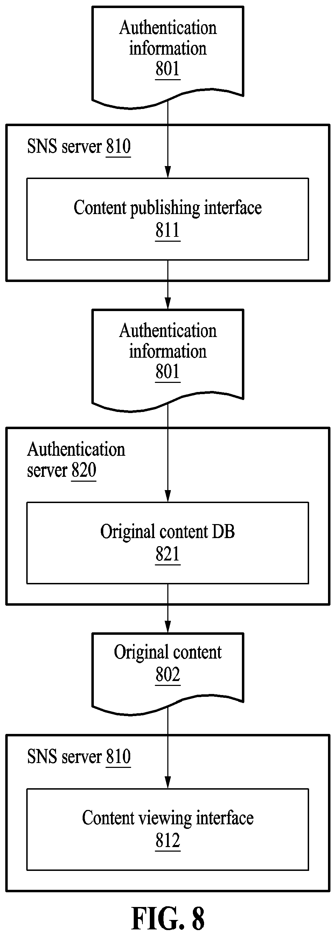

FIG. 8 illustrates an example authentication-based publishing process using authentication information, according to one or more embodiments. Referring to FIG. 8, an SNS server 810 may receive authentication information 801 from a user device through a content publishing interface 811 and transmit the authentication information 801 to an authentication server 820. The authentication server 820 may extract original content 802 corresponding to the authentication information 801 from an original content database 821 and transmit the original content 802 to the SNS server 810. The SNS server 810 may publish the original content 802 through a content viewing interface 812.

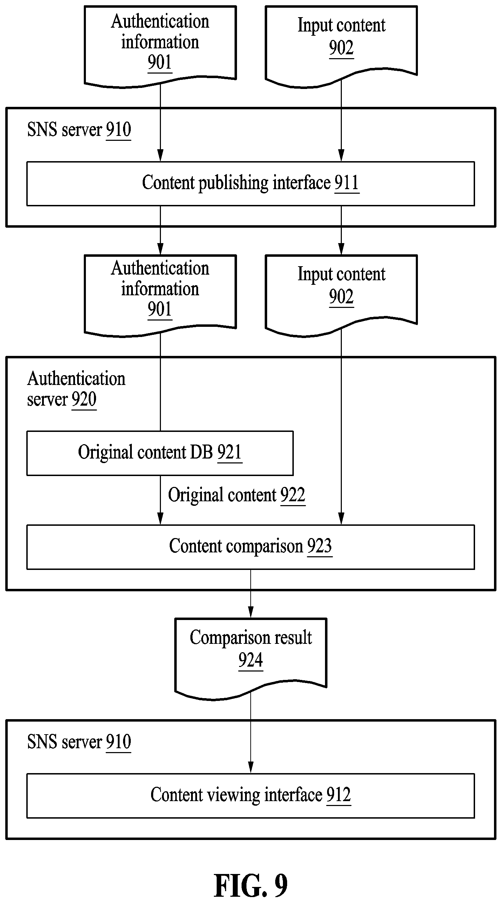

FIG. 9 illustrates an example authentication-based publishing process using authentication information and input content, according to one or more embodiments. Referring to FIG. 9, an SNS server 910 may receive authentication information 901 of original content 922 and input content 902 from a user device through a content publishing interface 911 and transmit the authentication information 901 and the input content 902 to an authentication server 920. The authentication server 920 may extract the original content 922 corresponding to the authentication information 901 from an original content database 921 and perform a content comparison 923 between the original content 922 and the input content 902. The authentication server 920 may transmit a comparison result 924 to the SNS server 910. The SNS server 910 may provide the comparison result 924 through a content viewing interface 912. The content viewing interface 912 may display the input content 902, the authentication information 901, the comparison result 924, or a combination thereof.

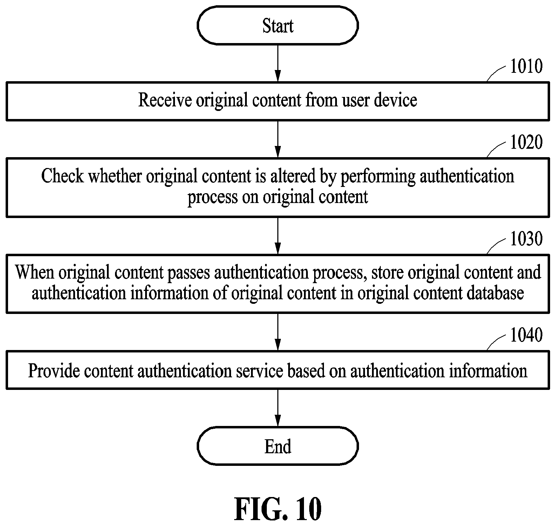

FIG. 10 illustrates an example method performed by an authentication server, according to one or more embodiments. Referring to FIG. 10, the authentication server may receive original content from a user device in operation 1010, check or determine whether the original content has been altered by performing an authentication process on the original content in operation 1020. When the original content passes the authentication process, the authentication server may store the original content and authentication information of the original content in an original content database in operation 1030, and provide a content authentication service based on the authentication information in operation 1040.

The original content may be sensor data in a secure state, generated by a sensor of the user device.

The secure state of the sensor data may be attained by encrypting the sensor data, storing the sensor data in a security storage, transmitting the sensor data using a security protocol, or a combination thereof.

The original content may include image sensor data in a secure state, generated by an image sensor of the user device.

Operation 1010 may include receiving the image sensor data from the user device in a state in which at least a portion of an ISP pipeline of the user device has not been applied to the image sensor data. The authentication server may generate improved original content by applying an alternative ISP pipeline corresponding to the at least a portion of the ISP pipeline to the image sensor data.

The authentication server may receive additional information including ISP adjustment information of the image sensor data about the at least a portion of the ISP pipeline. The authentication server may generate the improved original content by applying the alternative ISP pipeline to the image sensor data based on the ISP adjustment information.

Operation 1040 may include operations of receiving the authentication information from another device, extracting the original content from an original content database based on the authentication information, and transmitting the original content to the other device.

Operation 1040 may include operations of receiving input content and the authentication information from an SNS server, extracting original content from the original content database based on the authentication information, comparing the original content with the input content, and transmitting a comparison result to the SNS server.

The authentication server may receive, from the user device, additional information including information about the type of the original content, an attribute of the original content, or a combination thereof. The authentication server may check whether the original content has been altered based on the additional information.

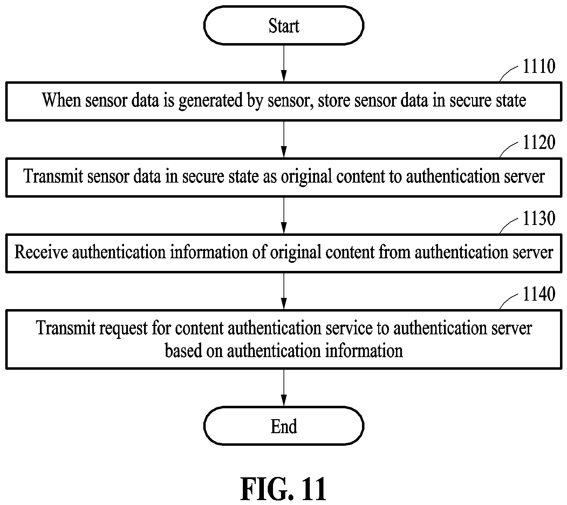

FIG. 11 illustrates an example of a method performed by a user device, according to one or more embodiments. Referring to FIG. 11, the user device may store, when sensor data is generated by a sensor, the sensor data in a secure state in operation 1110, transmit the sensor data in the secure state as original content to an authentication server in operation 1120, receive authentication information of the original content from the authentication server in operation 1130, and transmit a request for a content authentication service to the authentication server based on the authentication information in operation 1140.

The secure state of the sensor data may be attained by encrypting the sensor data, storing the sensor data in a security storage, transmitting the sensor data using a security protocol, or a combination thereof.

The sensor data from a sensor may be stored by a security processor in a security storage and transmitted to the authentication server based on a security protocol.

The user device may receive the sensor data corresponding to the authentication information from the authentication server based on the content authentication service.

Operation 1110 may include an operation of storing the sensor data in a secure state based on an original content retention mode of the user device being in an active state. When the original content retention mode is not active, the sensor data may be stored in a general state with lower security than the secure state.

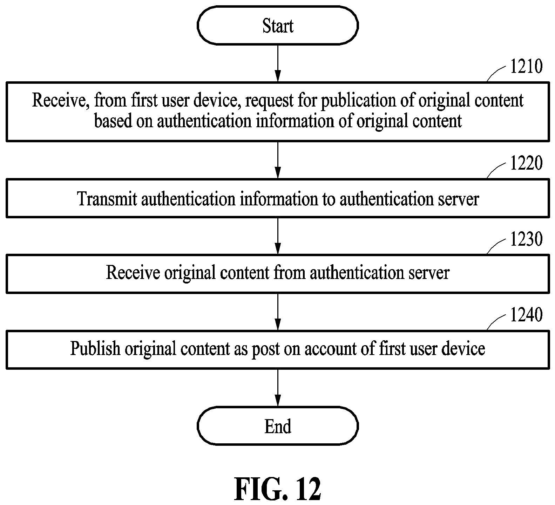

FIG. 12 illustrates an example of a method performed by an SNS server, according to one or more embodiments. Referring to FIG. 12, the SNS server may receive, from a first user device, a request for the publication of original content based on authentication information of the original content in operation 1210, transmit the authentication information to an authentication server in operation 1220, receive the original content from the authentication server in operation 1230, and publish the original content as a post on an account of the first user device in operation 1240.

The SNS server may receive the authentication information of the original content and input content from a second user device, transmit the authentication information of the original content and the input content to the authentication server, and receive a comparison result between the original content and the input content from the authentication server.

The SNS server may publish the input content and the comparison result as a post on the second user device.

The comparison result may include a score of the similarity between the original content and the input content.

The comparison result may include information about a difference area indicating that the similarity between the original content and the input content is less than a threshold.

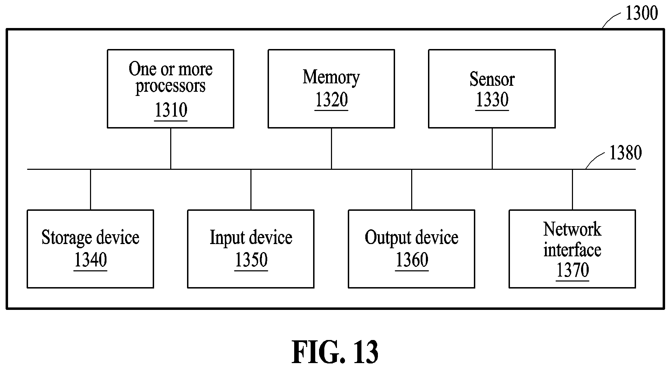

FIG. 13 illustrates an example of a configuration of an electronic device, according to one or more embodiments. Referring to FIG. 13, an electronic device 1300 may include one or more processors 1310, a memory 1320, a sensor 1330, a storage device 1340, an input device 1350, an output device 1360, and a network interface 1370. These components may communicate with one another via a communication bus 1380. For example, the electronic device 1300 may be implemented as at least a part of a mobile device such as a mobile phone, a smartphone, a personal digital assistant (PDA), a netbook, a tablet computer or a laptop computer, a wearable device such as a smart watch, a smart band or smart glasses, a computing device such as a desktop or a server, a home appliance such as a television, a smart television or a refrigerator, a security device such as a door lock, or a vehicle such as an autonomous vehicle or a smart vehicle. The electronic device 1300 may structurally and/or functionally include a user device, an authentication server, or an SNS server.

The one or more processors 1310 may execute instructions or functions to be executed in the electronic device 1300. For example, the one or more processors 1310 may process the instructions stored in the memory 1320 or the storage device 1340. The one or more processors 1310 may perform the operations described above with reference to FIGS. 1 to 12. When the electronic device 1300 structurally and/or functionally includes the user device, the one or more processors 1310 may include a general processor and/or a security processor.

The memory 1320 may include computer-readable storage media or a computer-readable storage device. The memory 1320 may store instructions to be executed by the one or more processors 1310 and may store related information while software and/or an application is being executed by the electronic device 1300. When the electronic device 1300 structurally and/or functionally includes the user device, the memory 1320 and/or the storage device 1340 may include a general storage and/or a security storage.

The sensor 1330 may generate sensor data. The storage device 1340 may include computer-readable storage media or a computer-readable storage device. The storage device 1340 may store a larger quantity of information than the memory 1320 for a long time. For example, the storage device 1340 may include a magnetic hard disk, an optical disk, flash memory, a floppy disk, or other types of non-volatile memory known in the art.

The input device 1350 may receive an input from the user through traditional input manners, such as a keyboard and a mouse, and through newer input manners, such as touch, voice, and an image. For example, the input device 1350 may include a keyboard, a mouse, a touch screen, a microphone, or any other device that detects the input from the user and transmits the detected input to the electronic device 1300. The output device 1360 may provide an output of the electronic device 1300 to the user through a visual, auditory, or haptic channel. The output device 1360 may include, for example, a display, a touch screen, a speaker, a vibration generator, or any other device that provides the output to the user. The network interface 1370 may communicate with an external device through a wired or wireless network.

The computing apparatuses, the servers, the electronic devices, the processors, the memories, the image sensors, the displays, the information output system and hardware, the storage devices, and other apparatuses, devices, units, modules, and components described herein with respect to FIGS. 1-13 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-13 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above disclosure, the scope of the disclosure may also be defined by the claims and their equivalents, and all variations within the scope of the claims and their equivalents are to be construed as being included in the disclosure.

## Claims

1. A method, performed by an authentication server, comprising:
receiving original content from a user device;
determining whether the original content has been altered by performing an authentication process on the original content;
based on the original content passing the authentication process, storing the original content and authentication information of the original content in an original content database; and
providing a content authentication service based on the authentication information.

2. The method of claim 1, wherein the original content is sensor data in a secure state, the sensor data generated by a sensor of the user device.

3. The method of claim 2, wherein the secure state of the sensor data is attained by encrypting the sensor data, storing the sensor data in a security storage of the user device, transmitting the sensor data using a security protocol, or a combination thereof.

4. The method of claims 2 or 3, wherein the sensor comprises an image sensor.

5. The method of claim 4, wherein
the receiving of the original content comprises receiving the image sensor data from the user device in a state in which a portion of an image signal processing, ISP, pipeline of the user device has not been applied to the image sensor data, and
the method further comprises generating improved original content by the authentication service applying, to the image sensor data, an alternative ISP pipeline corresponding to the unapplied portion of the ISP pipeline of the user device.

6. The method of claim 5, further comprising:
receiving, from the user device, in association with receiving the original content, additional information comprising information about the portion of the ISP pipeline of the user device,
wherein the improved original content is generated by applying the alternative ISP pipeline to the image sensor data based on information about the portion of the ISP pipeline of the user device.

7. The method of any one of the previous claims, wherein the providing of the content authentication service comprises:
receiving an instance of the authentication information from another device;
extracting the original content from the original content database based on the instance of the authentication information; and
transmitting the original content to the other device.

8. The method of any one of claims 1-6, wherein the providing of the content authentication service comprises:
receiving input content and an instance of the authentication information from a social network service, SNS, server;
based on the instance of the authentication information, comparing the original content of the original content database with the input content; and
transmitting a result of the comparing to the SNS server.

9. The method of any one of the previous claims, further comprising:
receiving additional information comprising information about a type of the original content, an attribute of the original content, or a combination thereof,
wherein the determining of whether the original content is altered comprises determining whether the original content has been altered based on the additional information.

10. The method of any one of the previous claims, wherein the authentication process comprises applying a liveness detection algorithm to the original content.

11. A method, performed by a user device, comprising:
when sensor data is generated by a sensor, storing the sensor data on the user device in a secure state;
transmitting the sensor data in the secure state to an authentication server as original content;
receiving authentication information of the original content from the authentication server, the authentication information generated by the authentication server based on the original content; and
transmitting a request for a content authentication service to the authentication server based on the authentication information.

12. The method of claim 11, wherein the secure state of the sensor data is attained by encrypting the sensor data, storing the sensor data in a security storage, transmitting the sensor data using a security protocol, or a combination thereof.

13. The method of claims 11 or 12, wherein the sensor data from the sensor is stored in a security storage of the user device by a security processor of the user device and transmitted to the authentication server based on a security protocol.

14. The method of any one of claims 11-13, further comprising:
receiving the sensor data corresponding to the authentication information from the authentication server based on the content authentication service.

15. The method of any one of claims 11-14, wherein the storing of the sensor data comprises:
based on whether an original content retention mode is active, selecting between:
storing the sensor data in the secure state; and
storing the sensor data in a general state with lower security than the secure state.
